Europäisches Patentamt

European Patent Office

Office européen des brevets

(19)

(11) Veröffentlichungsnummer: **0 059 681**
**A1**

(12) # EUROPÄISCHE PATENTANMELDUNG

(21) Anmeldenummer: 82810048.7

(22) Anmeldetag: 05.02.82

(51) Int. Cl.³: **B 60 P 1/44**
**B 60 P 7/12**

(30) Priorität: 26.02.81 CH 1290/81

(43) Veröffentlichungstag der Anmeldung:
08.09.82 Patentblatt 82/36

(84) Benannte Vertragsstaaten:
AT BE CH DE FR GB IT LI LU NL SE

(71) Anmelder: SCHWEIZERISCHE ALUMINIUM AG

CH-3965 Chippis(CH)

(72) Erfinder: Dossena, Claudio
Schwyzerstrasse 34
CH-8805 Richterswil(CH)

(54) Verriegelung für eine Abrollsicherung einer Ladebordwand.

(57) Die Erfindung betrifft eine Verriegelung 22 für eine Abrollsicherung 16 einer als Ladebrücke dienenden Ladebordwand 10, wobei beispielsweise die Rolle eines mit Gut beladenen Handwagens durch die Schwerkraft desselben Sicherungsklappen 12 und 14 der Abrollsicherung verschwenkt und hierbei in der Fahrfläche 32 der Ladebordwand eine Rastmulde bildet.

Die Verriegelung gelangt vorzugsweise an einer Abrollsicherung zur Anwendung, welche in der CH-Patentanmeldung No. 015367/77 (CH-Patent No.         ) beschrieben ist und stellt eine Weiterentwicklung der bisher an dieser Abrollsicherung zur Anwendung gelangenden Verriegelung dar. - Die Verriegelung umfasst einen der Sicherungsklappe einer Abrollsicherung zugeordneten Drehschieber 54 und/oder 56 und einen mit demselben in Wirkverbindung stehenden, hin- und herbeweglichen Schieber 20.

EP 0 059 681 A1

Fig.8

Croydon Printing Company Ltd.

-1-

Verriegelung für eine Abrollsicherung einer Ladebordwand

Die Erfindung bezieht sich auf eine Verriegelung für eine Abrollsicherung einer als Ladebrücke dienenden Ladebordwand, insbesondere für eine neigbare Ladebordwand mit wenigstens einer in deren Fahrfläche vorgesehenen Vertiefung und mindestens einer die Vertiefung in einer Ruhelage überdeckenden lös- und feststellbaren Sicherungsklappe, welche vornehmlich quer zur Abrollsicherung angeordnet ist und der zeitweiligen Aufnahme eines Teiles, beispielsweise einer Rolle eines zu sichernden Ladegutes dient, welche durch Schwerkraft die Sicherungsklappen verschwenkt und hierbei in der Fahrfläche der Ladebordwand eine Rastmulde für die Rolle durch bevorzugt zwei einander benachbarte, gegeneinander neigbare Sicherungsklappen bildet.

Bekannt ist beispielsweise gemäss der CH-Patentanmeldung No. 015367/77 eine Abrollsicherung der vorerwähnten Art, bei welcher die Unterseite der Sicherungsklappe gekrümmt und zur Ueberführung aus der Ruhelage in die Sicherungsstellung auf einer zur Fahrfläche der Bordwand versetzten Fläche abrollbar ist. Die Abrollsicherung ist mit einer Einrichtung zum Verriegeln der Schwenkklappen versehen, mit welcher die Sicherungsklappen in ihren Ausgangsstellung, derart verriegelt werden können, dass die Klappen keine Rastmulde bilden, wenn dieselben von der Rolle eines Ladefahrzeuges überfahren werden.

Die bisher an bekannten Abrollsicherungen zur Anwendung gelangenden Verriegelungen sind in konstruktiver Hinsicht verhältnismässig aufwendig oder können auch bezüglich der Funktion und der Handhabung den an solchen Verriegelungen zu stellenden Anforderungen oft nicht gerecht werden.

Der vorliegenden Erfindung liegt im wesentlichen die Aufgabe zugrunde, die in der Patentanmeldung No. 015367/77 (CH-Patent No.        ) zur Anwendung gelangende Verriegelung der Abrollsicherung im Hinblick auf die Konstruktion, die Handhabung und die Funktion zu verbessern.

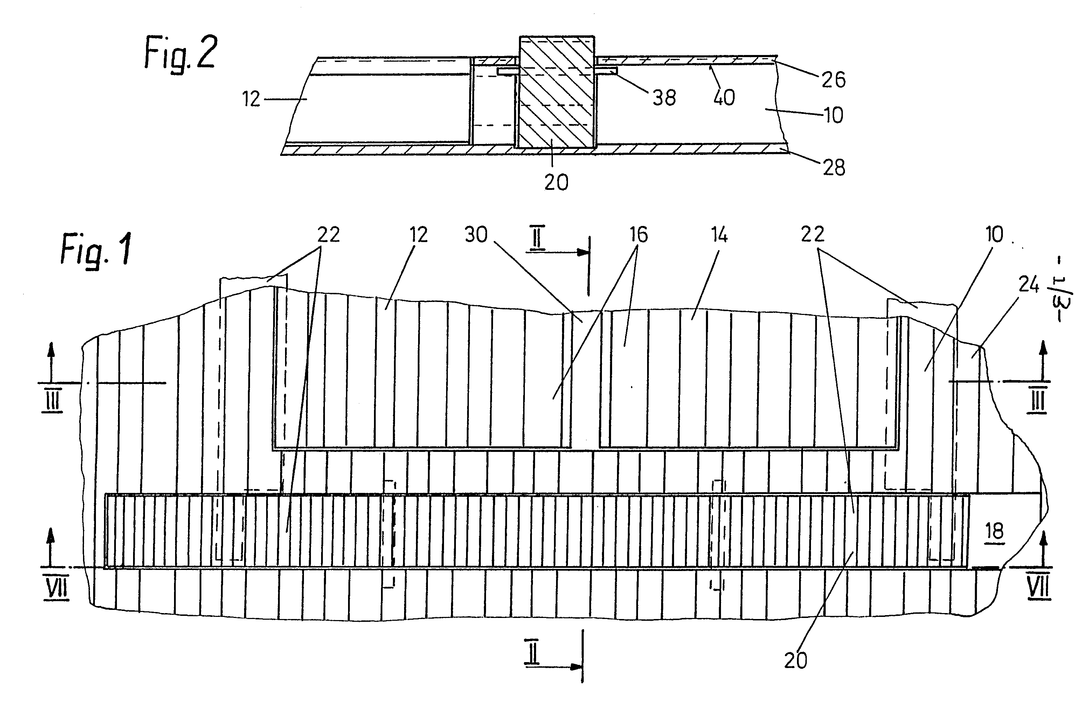

Erfindungsgemäss wird die Aufgabe dadurch gelöst, dass die Verriegelung einen der Sicherungklappe einer Abrollsicherung zugeordneten Drehschieber und einen mit demselben in Wirkverbindung stehenden, hin- und herbeweglichen Schieber umfasst. Weitere vorteilhafte Ausführungsformen der Erfindung sind aus der nachfolgenden Beschreibung im Zusammenhang mit den Figuren 1-8 zu ersehen.

Die Zeichnung zeigt ein Ausführungsbeispiel der Erfindung in vereinfachter Darstellungsweise, und zwar:

Fig. 1    eine Draufsicht auf eine Verriegelung einer an einer Ladebordwand angeordneten Abrollsicherung,

Fig. 2    einen Querschnitt durch die Verriegelung gemäss der Linie II - II in der Figur 1,

Fig. 3    einen Längsschnitt durch die Verriegelung gemäss der Linie III - III in der Figur 1, aus welchem die verriegelte Stellung von zwei Sicherungselementen einer Abrollsicherung zu ersehen ist,

Fig. 4    einen Längsschnitt durch die Verriegelung gemäss der Figur 3, aus welchem jedoch die entriegelte Stellung von zwei Sicherungelementen einer Abrollsicherung zu ersehen ist,

Fig. 5     eine Seitenansicht auf einen Drehschieber der Verriegelung,

Fig. 6     eine Ansicht auf den in der Fig. 5 gezeigten Drehschieber in der Richtung des Pfeiles A,

Fig. 7     einen Längsschnitt durch die Verriegelung gemäss der Linie VII - VII in der Figur 1, aus welchem die verriegelte Stellung von zwei Sicherungselementen einer Abrollsicherung mit Hilfe eines Schiebers zu ersehen ist und

Fig. 8     einen Längsschnitt durch die Verriegelung gemäss der Figur 7, aus welchem jedoch die entriegelte Stellung von zwei Sicherungselementen zu ersehen ist.

Gemäss den Figuren 1-8 ist eine an einer neigbaren Ladebordwand 10 angeordnete, aus zwei in eine Schräglage versetzbaren Sicherungklappen 12 und 14 bestehende Abrollsicherung 16 sowie ein in einem Spalt 18 der Ladebordwand hin- und herbeweglicher Schieber 20 einer Verriegelung 22 zu ersehen, mit welcher die beiden Sicherungsklappen in ihrer Ausgangslage, in welcher dieselben mit der Fahrfläche eine Ebene bilden, feststellbar sind. - Bezüglich des Aufbaues und der Arbeitsweise einer solchen Abrollsicherung ist in diesem Zusammenhang besonders auf die Erfindungsbeschreibung der CH-Patentanmeldung No. 015367/77 (CH-Patent No.     ) hinzuweisen.

Die Ladebordwand 10 besteht aus einzelnen miteinander verschweissten, vorzugsweise im Strangpressverfahren hergestellten Aluminium-Hohlfachplatten 24, die jeweils eine obere und eine untere, an der Aussenseite im wesentlichen ebene Deckwand 26 bzw. 28 aufweisen. In der oberen Deckwand 26 einer Hohlfachplatte 24 sind Ausfräsungen vorgesehen, durch welche mindestens eine bis zur unteren Deckwand 28 reichende Vertiefung 30 gebildet wird, in welcher eine aus den beiden Sicherungsklappen 12 und 14 bestehende Abrollsicherung 16 quer zur Bewegungsrichtung eines zumeist von Hand bedienbaren, nicht näher dargestellten Rollfahrzeuges angeordnet ist.

Die als Ladebrücke dienbare Ladebordwand 10 ist beispielsweise in einer nicht näher dargestellten bekannten Weise an der Hinterkante der Ladefläche eines Lastkraftwagens heb- und senkbar sowie nach unten mit Hilfe von Hub- und Senkvorrichtungen neigbar. In der Ruhestellung bilden die in der Ladebordwand 10 versenkt angeordneten Sicherungsklappenpaare mit der Fahrfläche 32 der Ladebordwand 10 eine Ebene.

Der in dem Spalt 18 der Ladebordwand 10 hin- und herbeweglich angeordnete Schieber 20 der Verriegelung 22 weist an seiner Unterseite eine Blattfeder 34 auf, welche als Gleit- und Stützelement für den Schieber dient und zwei an einer Seite des Schiebers herausragende, mit demselben fest verbundene Stifte 36 und 38 gegen die Unterseite 40 der oberen Deckwand 26 der Ladebordwand 10 presst. Die Stifte 36 und 38 sind in einer derartigen Höhenlage an dem Schieber 20 befestigt worden, dass die Unterseite 42 des Schiebers 20 von der Bodenfläche 44 des Spaltes 18 durch die Blattfeder 34 derart angehoben wird, dass beim Hin- und Herbewegen des Schiebers 20 einerseits die Blattfeder 34 auf der Bodenfläche 44 des Spaltes 18 und andererseits die beiden Stifte 36 und 38 an der Unterseite der oberen Deckwand 26 der Ladebordwand 10 gleiten. An den beiden äusseren Enden des Schiebers 20 sind im Hinblick auf die Bewegungsrichtung desselben schräge geneigte Schlitze 46 und 48 vorgesehen, mit welchen jeweils exzentrisch angeordnete Zapfen 50 und 52 eines in der Ladebordwand 10 drehbar gelagerten Drehschiebers 54 bzw. 56 im Eingriff stehen.

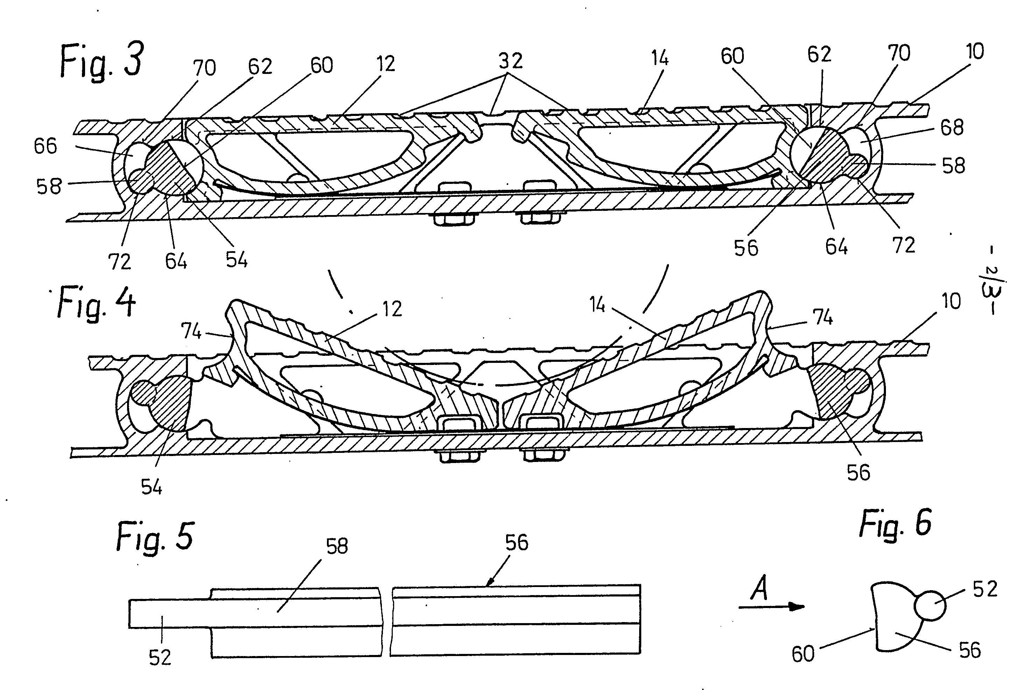

Gemäss den Figuren 5 und 6 weist der aus einem Strangpressprofil hergestellte Drehschieber 54 oder 56 einerseits einen sich über die gesamte Länge desselben erstreckenden Exzenter 58 und andererseits eine sich in der Längsrichtung erstrekkende Abflachung 60 auf.

Der Exzenter 58 erstreckt sich über die Länge des Grundkörpers des Drehschiebers 54 bzw. 56 hinaus und bildet jeweils mit dem über den Grundkörper des Drehschiebers hinausragenden Bereich einen Zapfen 50 bzw. 52, welcher in einem der beiden Schlitze 46 und 48 des Schiebers 20 geführt ist bzw. mit demselben im Eingriff steht.

Die beiden Drehschieber 54 und 56 sind quer zur Fahrtrichtung in der Ladebordwand 10 zwischen der oberen und unteren Deckwand 26 und 28 um ihre eigene Achse verschwenkbar an Lagerstellen 62 und 64 gelagert. Für jeweils einen Exzenter 58 des Drehschiebers 54 bzw. 56 sind an einem Hohlraum 66 oder 68 einer Hohlfachplatte 24 der Ladebordwand 10 jeweils zwei Anschläge 70 und 72 vorgesehen, mit welchen der Winkelbereich der Drehbewegung des Drehschiebers 54 buw. 56 begrenzt wird.

Den beiden Lagerstellen 62 und 64 der Ladebordwand gegenüberstehend ist jeweils eine - im Querschnitt gesehen - vorzugsweise kreisbogenförmig ausgebildete Ausnehmung 74 der Sicherungsklappen 12 und/oder 14 zugeordnet, in welche die Dreh-schieber 54 und/oder 56 zwecks Verriegelung der Sicherungsklappen der Abrollsicherung an der Ladebordwand 10 einrasten können.

Die Arbeitsweise der Verriegelung ist wie folgt:

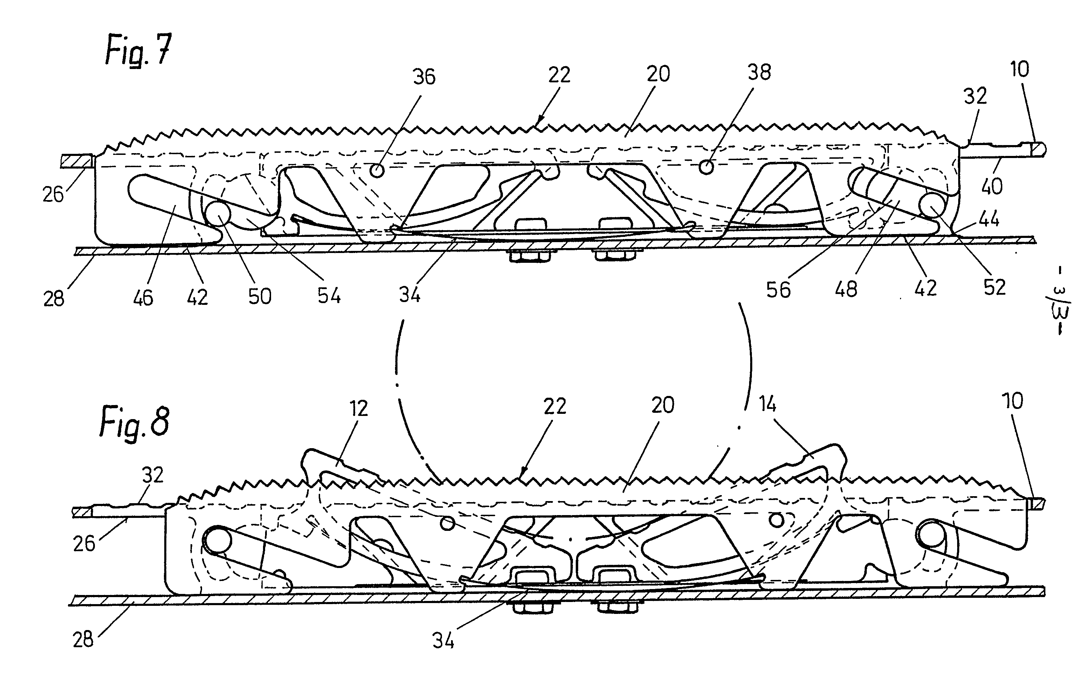

In der Ausgangslage der Abrollsicherung 16 befinden sich die beiden Sicherungsklappen 12 und 14 in einer verriegelten Stellung, bei welcher die Oberseiten der Sicherungsklappen mit der Fahrfläche der Ladebordwand 10, wie in den Figuren 3 und 7 gezeigt, eine Ebene bilden.

In dieser Ausgangslage der Abrollsicherung ist der in der Figur 7 gezeigte Schieber 20 nach links in eine Stellung geschoben worden, bei welcher sich die Zapfen 50 und 52 des Drehschiebers 54 bzw. 56 in einer unteren Position befinden und die Drehschieber 54 und 56 jeweils in eine vorzugsweise kreisbogenförmige Ausnehmung 74 einer Sicherungsklappe 12 und/oder 14 eingerastet sind.

Um die Abrollsicherung 16 in die Betriebstellung, das heisst in eine entriegelte Stellung der beiden Sicherungsklappen 12 und 14 zu versetzen, werden die Zapfen 50 und 52 der beiden Drehschieber in dem Hohlraum 66 oder 68 nach oben hin gegen die Anschläge 70 durch Verdrehung der Drehschieber mit Hilfe der Schieber 20 nach oben hin, wie in den Figuren 4 und 8 dargestellt, bewegt, wobei die Abflachungen 60 der beiden Drehschieber in dem Bewegungsbereich der beiden Sicherungsklappen 12 und 14 gelangen und dieselben somit entriegeln. Das Drehen der beiden Drehschieber 54 und 56 in die Entriegelungsstellung wird dadurch bewerkstelligt, dass der Schieber 20 von links nach rechts soweit verschoben wird, bis er die in der Figur 8 gezeigte Stellung einnimmt, in welcher die in den Schlitzen 46 und 48 des Schiebers 20 geführten Zapfen 50 und 52 der beiden Drehschieber in die obere Position bewegt worden sind.

Die vorliegende Erfindung ist nicht auf das in den Figuren 1-8 gezeigte Ausführungsbeispiel beschränkt. - Im Sinne der Erfindung ist es beispielsweise auch möglich, eine derartige Verriegelung an einer mit um eine Achse verschwenkbaren Sicherungsklappen versehenen Abrollsicherung zu verwenden, wenn dieses erwünscht ist. Die Verriegelung ist vorteilhafterweise an unterschiedlich ausgebildeten Abrollsicherungen einsetzbar und weist auch weitere Vorteile bezüglich der Ausbildung und der verhältnismässig hohen Belastbarkeit auf.

Patentansprüche

1.  Verriegelung für eine Abrollsicherung einer als Ladebrücke dienenden Ladebordwand, insbesondere für eine
    neigbare Ladebordwand mit wenigsten einer in deren
    Fahrfläche vorgesehenen Vertiefung und mindestens einer
    die Vertiefung in einer Ruhelage überdeckenden lös- und
    feststellbaren Sicherungsklappe, welche vornehmlich
    quer zur Abrollsicherung angeordent ist und der zeitweiligen Aufnahme eines Teiles, beispielsweise einer
    Rolle eines zu sichernden Ladegutes dient, welche durch
    Schwerkraft die Sicherungsklappen verschwenkt und hierbei in der Fahrfläche der Ladebordwand eine Rastmulde
    für die Rolle durch bevorzugt zwei einander benachbarte,
    gegeneinander neigbare Sicherungsklappen bildet, dadurch gekennzeichnet,

    dass die Verriegelung (22) einen der Sicherungsklappe
    (12 und/oder 14) einer Abrollsicherung (16) zugeordenten
    Drehschieber (54 und/oder 56) und einen mit demselben in
    Wirkverbindung stehenden, hin- und herbeweglichen Schieber (20) umfasst.

2.  Verriegelung nach dem Anspruch 1, dadurch gekennzeichnet, dass die Sicherungsklappe (12 und/oder 14) eine
    Ausnehmung (74) aufweist, mit welcher der Drehschieber
    (54 oder 56) zum Verriegeln der Sicherungsklappe in
    Eingriff gebracht werden kann.

3. Verriegelung nach dem Anspruch 1, dadurch gekennzeichnet, dass der Drehschieber (54 und/oder 56) quer zur Fahrtrichtung in der Ladebordwand (10) zwischen der oberen und der unteren Deckwand (26 und 28) an Lagerstellen (62 und 64) um die eigene Achse verschwenkbar gelagert ist.

4. Verriegelung nach dem Anspruch 3, dadurch gekennzeichnet, dass der Drehschieber (54 oder 56) einerseits einen sich über die gesamte Länge desselben erstreckenden Exzenter (58) und andererseits eine sich in der Längsrichtung erstreckende Abflachung (60) aufweist.

5. Verriegelung nach dem Anspruch 4, dadurch gekennzeichnet, dass der Exzenter (58) mit einem über die Länge des Grundkörpers des Drehschiebers (54 oder 56) hinausragenden Bereich einen Zapfen (50 bzw. 52) bildet.

6. Verriegelung nach den Ansprüchen 1 und 3, dadurch gekennzeichnet, dass im näheren Bereich der Lagerstellen (62 und 64) des Drehschiebers (54 und/oder 56) jeweils zwei Anschläge (70 und 72) vorgesehen sind, welche der Begrenzung des Winkelbereiches der Drehbewegung des Drehschiebers (54 bzw. 56) dienen.

7. Verriegelung nach dem Anspruch 1, dadurch gekennzeichnet, dass der Schieber (20) an seinen beiden äusseren Enden jeweils einen im Hinblick auf die Bewegungsrichtung desselben schräg geneigten Schlitz (46 und/oder 48) aufweist.

8. Verriegelung nach den Ansprüchen 1 und 7, dadurch gekennzeichnet, dass der Schieber (20) der Verriegelung an seiner Unterseite eine Blattfeder (34) aufweist, welche als Gleit- und Stützelement für den Schieber dient.

9. Verriegelung nach den Ansprüchen 1,7 und 8, dadurch gekennzeichnet, dass auf einer Seite des Schiebers (20) zwei mit demselben fest verbundene Stifte (36 und 38) herausragen, welche in einer derartigen Höhenlage an dem Schieber angeordnet sind, dass diese durch den von der Blattfeder (34) auf den Schieber (20) ausgeübten Druck an der Unterseite der oberen Deckwand (26) der Ladebordwand (10) zum Anliegen kommen, bzw. beim Hin- und Herscheiben des Schiebers an der Unterseite der oberen Deckwand gleiten.

10. Verriegelung nach den Ansprüchen 1,3,4,5 und 7, dadurch gekennzeichnet, dass die Schlitze (46 und 48) des Schiebers (20) mit den Zapfen (50 und 52) der Drehschieber (54 und 56) im Eingriff stehen.

Fig. 2

Fig. 1

- 1/3 -

0059681

0059681

- 2/3 -

Fig. 3

Fig. 4

Fig. 5

Fig. 6

0059681

3/3

Fig. 7

Fig. 8

**Europäisches Patentamt**

# EUROPÄISCHER RECHERCHENBERICHT

## EINSCHLÄGIGE DOKUMENTE

| Kategorie | Kennzeichnung des Dokuments mit Angabe. soweit erforderlich. der maßgeblichen Teile | Betrifft Anspruch | KLASSIFIKATION DER ANMELDUNG (Int. Cl. ³) |
|---|---|---|---|
| D | FR-A-2 411 730  (ALUMINIUM SUISSE S.A.) <br> * Ansprüche 1,2,5 * & CH - A - 1 536 777 | 1 | B 60 P    1/44 <br> B 60 P    7/12 |
| A | DE-A-2 441 168  (FOKKER) | | |
| A | FR-A-1 240 446  (DE COLNET) | | |
| A | US-A-2 623 759  (FORBAS) | | |
| A | DE-A-2 063 803  (KILGUS) | | |
| A | LU-A-   78 580  (TOUSSAINT) | | |
| A | FR-A-2 244 645  (PEUGEOT) | | |

RECHERCHIERTE SACHGEBIETE (Int. Cl ³)

B 60 P
B 66 F
B 65 G
B 62 B

Der vorliegende Recherchenbericht wurde für alle Patentansprüche erstellt

| Recherchenort | Abschlußdatum der Recherche | Prüfer |
|---|---|---|
| DEN HAAG | 02-06-1982 | SCHMITTER J.M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument. das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82